# EUROPEAN PATENT APPLICATION

(11) **EP 3 992 854 A1**
(43) Date of publication of application: **04.05.2022**
(21) Application number: 21162474.7
(22) Date of filing: 15.03.2021
(51) Int. Cl.: G06K 19/07, G06Q 10/08

(54) **RFID TAG MODULE HAVING TEMPERATURE AND HUMIDITY LOGGING FUNCTION**

(30) Priority: 28.10.2020 KR 20200141590
(71) Applicant: Apulse Technology Co., Ltd., Gyeonggi-do 14322 (KR)
(72) Inventor: KIM, Nam Joong, Ansan-si, Gyeonggi-do 15622 (KR)
(74) Representative: Isarpatent

(57) **Abstract**

A radio frequency identification (RFID) tag module has a temperature/humidity logging function capable of logging temperature and humidity inside a box, based on an RFID tag, to stably manage the quality of a product contained in the box. The RFID tag module is installed in the box in which the product is packed, and includes a temperature/humidity sensor detecting a temperature/humidity inside the box in which the product is packed, and an RFID tag logging the temperature/humidity detected by the temperature/humidity sensor.

## Description

### TECHNICAL FIELD

The present disclosure generally relates to an RFID system. Particularly, the present disclosure relates to an RFID tag module having a temperature and humidity logging function based on an RFID tag.

### BACKGROUND

A radio frequency identification (RFID) tag, which is a kind of an electronic tag, is capable of transmitting recorded information wirelessly through radio waves. An RFID reader is capable of receiving such information from the RFID tag. The RFID reader can interpret the received information and acquire unique information of an object to which the RFID tag is attached.

Thus, having the ability of reading information recorded in the RFID tag in a noncontact manner, the RFID reader can be used for recognizing, tracking, and managing a great variety of objects such as products, animals, and people to which the RFID tags are attached.

When such as RFID tag is attached to a product (or goods, commodity, etc.), the RFID tag merely provides information about the product and does not provide environmental information such as temperature and humidity of a box that contains such products. The temperature and humidity is a factor that affects the quality of products in a process of transporting or storing such products in a boxed state. In particular, in case of products requiring temperature and humidity management, the temperature and humidity inside the box is an important and essential factor for product management.

### SUMMARY

Accordingly, the present disclosure provides an RFID tag module having a temperature/humidity logging function capable of logging temperature and humidity inside a box, based on an RFID tag, to stably manage the quality of a product contained in the box.

According to the present disclosure, a radio frequency identification (RFID) tag module is installed in a box in which a product is packed, and has a temperature and humidity logging function. The RFID tag module includes a temperature/humidity sensor detecting a temperature/humidity inside the box in which the product is packed, and an RFID tag logging the temperature/humidity detected by the temperature/humidity sensor.

The RFID tag module may further include an output device receiving the logged temperature/humidity from the RFID tag and outputting the received temperature/humidity.

In the RFID tag module, the RFID tag may output an alert through the output device when the logged temperature/humidity is out of a predetermined temperature/humidity range.

In the RFID tag module, the output device may include at least one of a display device and an audio output device.

The RFID tag module may further include an energy harvester performing energy harvesting by receiving a radio wave from surroundings and converting the received radio wave into electric energy, and an electric energy storage receiving the electric energy from the energy harvester and storing the received energy. The electric energy storage may provide the electric energy to at least one of the temperature/humidity sensor and the output device in response to a control signal of the RFID tag.

In the RFID tag module, the RFID tag may wake up and transmit the logged temperature/humidity information to an RFID reader upon receiving a reading signal from the RFID reader, the RFID tag may supply the electric energy from the electric energy storage to the display device and output current temperature/humidity information to the display device.

The RFID tag module may include a main substrate on which the RFID tag, the temperature/humidity sensor, the audio output device, the energy harvester, and the electric energy storage are mounted, and the display device is stacked; a flexible substrate electrically connecting the main substrate and the display device; and a case protecting the main substrate, the flexible substrate, and the display device, excluding a screen of the display device, from an external environment.

In the RFID tag module, the temperature/humidity sensor may include a temperature/humidity sensing terminal capable of detecting temperature/humidity inside the box, and the temperature/humidity sensing terminal may protrude from the main substrate and further protrudes out of the case.

In the RFID tag module, the RFID tag may be a passive tag.

According to the present invention, the RFID tag module can detect temperature/humidity through the temperature/humidity sensor thereof and also log the detected temperature/humidity through the RFID tag thereof. This allows the quality of products contained in the box to be more stably managed.

In addition, the RFID tag module can visually or audibly output the logged temperature/humidity and/or an alert through the output device thereof if the logged temperature/humidity is out of a predetermined temperature/humidity range. This allows an administrator to quickly manage products contained in the box or take necessary actions urgently.

In addition, the RFID tag module can display current temperature/humidity on the output device thereof in response to a reading operation of the RFID reader. This allows an administrator to intuitively recognize temperature/humidity information.

In addition, the RFID tag module can harvest ambient energy through the energy harvester to generate electric energy, thereby compensating for power consumption of the temperature/humidity sensor and the output device.

Also, in the RFID tag module, all or some of the RFID tag, the temperature/humidity sensor, and the output device may be implemented as one integrated component or element.

### BRIEF DESCRIPTION OF THE DRAWINGS

FIG. 1 is a block diagram illustrating an RFID system including an RFID tag module having a temperature/humidity logging function according to an embodiment of the present disclosure.
FIG. 2 is a block diagram illustrating the configuration of the RFID tag module shown in FIG. 1.
FIG. 3 is an exemplary diagram illustrating the RFID tag module shown in FIG. 1.
FIG. 4 is a perspective view illustrating a state in which an RFID tag module having a temperature/humidity logging function according to an embodiment of the present disclosure is installed in a box.
FIG. 5 is an enlarged view illustrating portion A of FIG. 4 to exemplarily show temperature and humidity information displayed on a display device of the RFID tag module.

### DETAILED DESCRIPTION

Hereinafter, embodiments of the present disclosure will be described in detail with reference to the accompanying drawings. The present disclosure may, however, be embodied in many different forms and should not be construed as being limited to the embodiments set forth herein. Rather, these embodiments are provided so that the disclosure will be thorough and complete and will fully convey the scope of the disclosure to those skilled in the art.

In the following description of embodiments, techniques that are well known in the art and not directly related to the present disclosure are not described. This is to clearly convey the subject matter of the present disclosure by omitting an unnecessary explanation. For the same reason, some elements in the drawings are exaggerated, omitted, or schematically illustrated. Also, the size of each element does not entirely reflect the actual size. In the disclosure, the same or corresponding elements are denoted by the same reference numerals.

In the description, singular forms are intended to include plural forms as well, unless the context clearly indicates otherwise.

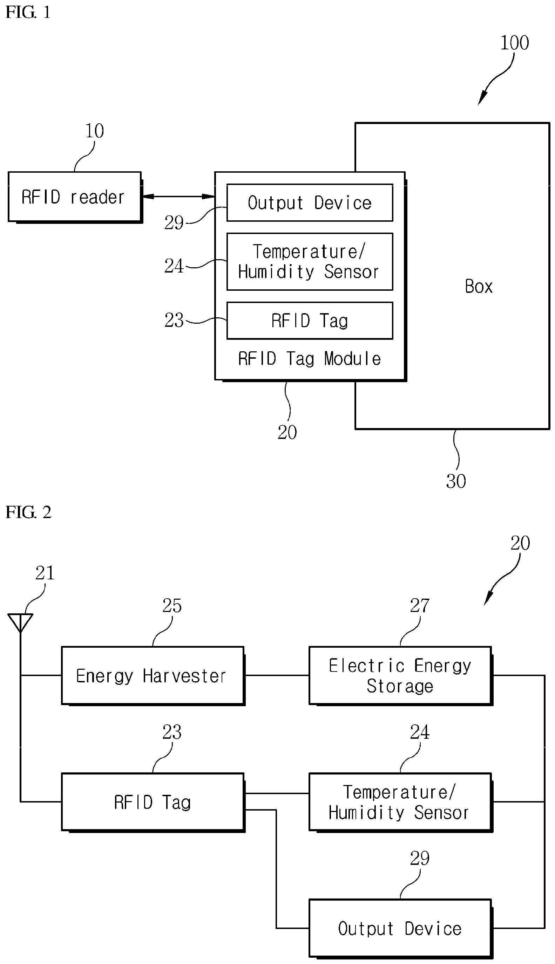

FIG. 1 is a block diagram illustrating an RFID system including an RFID tag module having a temperature/humidity logging function according to an embodiment of the present disclosure.

Referring to FIG. 1, the RFID system 100 includes an RFID reader 10 and the RFID tag module 20 having a temperature/humidity logging function. The RFID tag module 20 is installed in a box 30 in which a certain product (or its equivalent such as a product) is packed.

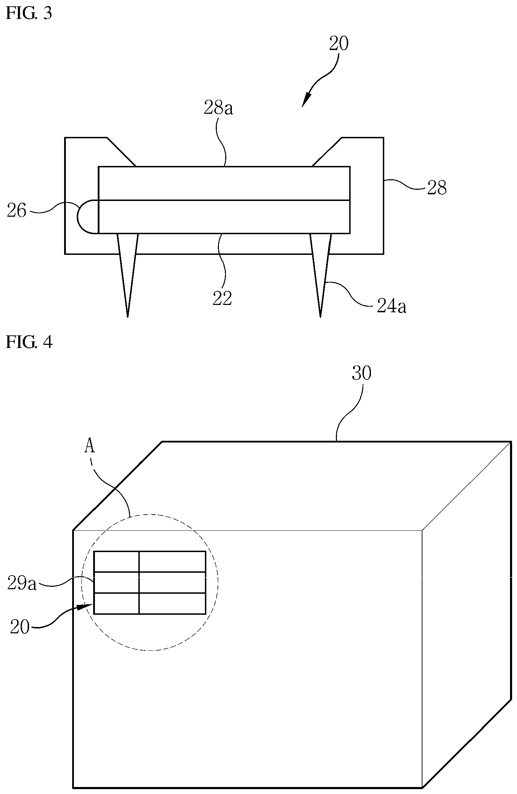

The box 30 is a container for packing a product. The box 30 may be formed of a typical material such as paper, Styrofoam, vinyl, or plastic. The RFID tag module 20 is attached to the box 30 or at least one product in the box 30 so as to detect the temperature and humidity (hereinafter, temperature/humidity) inside the box 30. In case that the RFID tag module 20 is attached to the box 30, it may be attached to the inside or outside of the box 30. Even if the RFID tag module 20 is attached to the outside of the box 30, a temperature/humidity sensing terminal (24a in FIG. 3) of the RFID tag module 20 is exposed into the box 30 to detect the temperature/humidity inside the box 30.

The RFID reader 10 reads an RFID tag 23 of the RFID tag module 20, that is, reads information recorded in the RFID tag 23, and stores the read information of the RFID tag 23. The RFID reader 10 may display the read information of the RFID tag 23 to visually offer the information to an administrator. The RFID reader 10 may provide necessary information to the RFID tag 23 to update the information recorded in the RFID tag 23. The information read by the RFID reader 10 from the RFID tag module 20 includes logged temperature/humidity information.

Basically, the RFID tag module 20 performs the function of the RFID tag 23. Additionally, the RFID tag module 20 detects, through a temperature/humidity sensor 24 thereof, the temperature/humidity inside the box 30 in which the product is packed. The RFID tag 23 logs the temperature/humidity detected by the temperature/humidity sensor 24. In addition, the RFID tag module 20 may output, through an output device 29 thereof, information recorded in the RFID tag 23, for example, information related to the logged temperature/humidity such that an administrator can perceive the information. The information related to the logged temperature/humidity may include a current temperature/humidity and a certain alert to be visually or audibly outputted when the logged temperature/humidity is out of a predetermined temperature/humidity range.

The RFID reader 10 and the RFID tag module 20 are capable of operating in the RFID communication frequency band, for example, in the 900 MHz band.

As described above, the RFID tag module 20 can detect temperature/humidity through the temperature/humidity sensor 24 thereof and also log the detected temperature/humidity through the RFID tag 23 thereof. This allows the quality of products contained in the box 30 to be more stably managed.

In addition, the RFID tag module 20 can visually or audibly output the logged temperature/humidity and/or an alert through the output device 29 thereof if the logged temperature/humidity is out of a predetermined temperature/humidity range. This allows an administrator to quickly manage products contained in the box 30 or take necessary actions urgently.

In addition, the RFID tag module 20 can display current temperature/humidity on the output device 29 thereof in response to a reading operation of the RFID reader 10. This allows an administrator to intuitively recognize temperature/humidity information.

Also, in the RFID tag module 20, all or some of the RFID tag 23, the temperature/humidity sensor 24, and the output device 29 may be implemented as one integrated component or element.

Now, the RFID tag module 20 according to an embodiment of the present disclosure will be described in more detail with reference to FIGS. 1 to 3. FIG. 2 is a block diagram illustrating the configuration of the RFID tag module 20 shown in FIG. 1, and FIG. 3 is an exemplary diagram illustrating the RFID tag module 20 shown in FIG. 1.

The RFID tag module 20 includes the temperature/humidity sensor 24 and the RFID tag 23. The temperature/humidity sensor 24 detects temperature/humidity inside the box 30 in which the product is packed. In addition, the RFID tag 23 logs the temperature/humidity detected by the temperature/humidity sensor 24.

In addition, the RFID tag module 20 may further include an antenna 21, an energy harvester 25, an electric energy storage 27, a main substrate 22, a flexible substrate 26, a case 28, and an output device 29.

As described above, the temperature/humidity sensor 24 is capable of detecting the temperature/humidity inside the box 30 in which the product is packed, and transmitting the detected temperature/humidity to the RFID tag 23. In order to detect the temperature/humidity inside the box 30, the temperature/humidity sensor 24 has a temperature/humidity sensing terminal 24a located inside or exposed into the box 30. For example, the temperature/humidity sensing terminal 24a may be formed in a pin shape. If the RFID tag module 20 is attached to the outside of the box 30, the temperature/humidity sensing terminal 24a may penetrate through the box 30 and be exposed into the box 30.

When the RFID tag 23 is in a power-off state, the temperature/humidity sensor 24 may temporarily store temperature/humidity detected. When the RFID tag 23 wakes up, the temperature/humidity sensor 24 may transmit the temporarily stored temperature/humidity to the RFID tag 23.

The RFID tag 23 may store and/or output information thereof. This information of the RFID tag 23 includes unique information on the product contained in the box 30. In addition, the information of the RFID tag 23 includes logged temperature/humidity information. Further, the information of the RFID tag 23 may include the number and time points of alert outputs. This time point corresponds to a time that the logged temperature/humidity is out of a predetermined temperature/humidity range.

The RFID tag 23 maintains a power-off state in normal times. Upon receiving a reading signal from the RFID reader 10 through the antenna 21, the RFID tag 23 wakes up and transmits the stored information to the RFID reader 10 through the antenna 21. This information transmitted to the RFID reader 10 may include logged temperature/humidity information.

In addition, after wake-up, the RFID tag 23 may receive new information from the RFID reader 10 and update the previously stored information with the received new information.

The RFID tag 23 may output the current temperature/humidity among the logged temperature/humidity information through the output device 29. If the logged temperature/humidity is out of a predetermined temperature/humidity range, the RFID tag 23 may output an alert through the output device 29. The temperature/humidity range may be differently predetermined according to the type of product contained in the box 30.

The RFID tag 23 may be a passive tag, but is not limited thereto.

The energy harvester 25 receives a radio wave from the surroundings through the antenna 21 and converting it into electric energy, that is, performs energy harvesting. For example, the energy harvester 25 may perform the energy harvesting by receiving an RF signal from a communication device in a short distance from the RFID tag module 20. In this case, various short-range communication technologies may be used such as Bluetooth, Bluetooth low energy (BLE), Zigbee, WiFi, long term evolution (LTE), and 5th generation new radio (5G NR).

The electric energy storage 27 receives electric energy from the energy harvester 25 and stores the received energy. The electric energy storage 27 may be a secondary battery capable of repetitive charging and discharging. The electric energy storage 27 may supply, to the temperature/humidity sensor 24 and the output device 29, electric energy required for the operations of the temperature/humidity sensor 24 and the output device 29. For example, in response to a control signal of the RFID tag 23, the electric energy storage 27 may provide electric energy to the temperature/humidity sensor 24 and/or the output device 29.

The output device 29 visually or audibly outputs information of the RFID tag 23. For example, the output device 29 may receive temperature/humidity information from the RFID tag 23 and output the received information. Also, the output device 29 may output an alert in response to a control signal of the RFID tag 23 when the logged temperature/humidity is out of a predetermined temperature/humidity range.

The output device 29 includes a display device 29a that displays information of the RFID tag 23, and an audio output device (not shown) that outputs an alert with a warning sound. The display device 29a may display an alert with a warning phrase, color, graphic, or any other visual effect.

The display device 29a maintains a power-off state in normal times. The display device 29a may wake up in response to a control signal of the RFID tag 23, receive information from the RFID tag 23, and display the received information. The display device 29a may be implemented as a liquid crystal display (LCD), a light emitting device (LED), an active matrix organic light emitting diode (AMOLED), or a touch screen.

Accordingly, a manager of the RFID reader 10 can intuitively and immediately perceive information of the RFID tag 23 through the display device 29a of the RFID tag module 20. For example, when the RFID tag module 20 is attached to the box 30, the display device 29a may display a product name, a temperature, a humidity, and the like.

In addition, the RFID tag module 20 harvests ambient energy through the energy harvester 25 to generate electric energy, thereby compensating for power consumption of the temperature/humidity sensor 24 and the output device 29. That is, if electric energy is supplied only with a secondary battery used as the electric energy storage 27, the lifespan of the RFID tag module 20 may be short. However, in case of the RFID tag module 20 according to an embodiment, the energy harvester 25 performs energy harvesting and stores electric energy in the electric energy storage 27 when, for example, the RFID tag 23 does not operate. Thus, the RFID tag module 20 may supplement power consumed by the operations of the temperature/humidity sensor 24 and the output device 29.

In an embodiment, the RFID tag module 20 may be implemented as shown in FIG. 3.

Specifically, the RFID tag module 20 according to an embodiment includes the main substrate 22, the flexible substrate 26, and the case 28.

The RFID tag 23, the temperature/humidity sensor 24, the audio output device (included in the output device 29), the energy harvester 25, and the electric energy storage 27, all of which are described above and shown in FIG. 2, are mounted on the main substrate 22. The above-described temperature/humidity sensing terminal 24a of the temperature/humidity sensor 24 protrudes from the lower surface of the main substrate 22. In addition, the temperature/humidity sensing terminal 24a further protrudes out of the case 28.

The flexible substrate 26 electrically connects the main substrate 22 and the display device 29a. For example, as shown, the flexible substrate 26 may be connected at one end thereof to the lower surface of the main substrate 22, extended along one side surface of the main substrate 22, and connected at the other end thereof to the lower surface of the display device 29a. That is, the display device 29a may be stacked on the main substrate 22 with the flexible substrate 26 interposed. This connection structure is, however, exemplary only. The screen of the display device 29a on which information is displayed is disposed facing outward (that is, upward in FIG. 3).

In addition, the case 28 protects the main substrate 22, the flexible substrate 26, and the display device 29a, excluding the screen of the display device 29a, from an external environment. For example, the case 28 may be provided in a certain premanufactured form and assembled to enclose the main substrate 22, the flexible substrate 26, and the display portion 29a. In another example, the case 28 may be molded with a liquid plastic material to seal the main substrate 22, the flexible substrate 26, and the display portion 29a.

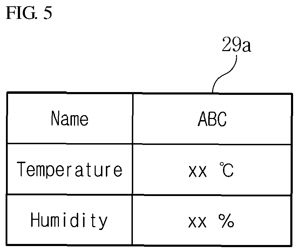

The above-described RFID tag module 20 may be installed in the box 30 as shown in FIGS. 4 and 5. FIG. 4 is a perspective view illustrating a state in which an RFID tag module having a temperature/humidity logging function according to an embodiment of the present disclosure is installed in a box. FIG. 5 is an enlarged view illustrating portion A of FIG. 4 to exemplarily show temperature and humidity information displayed on a display device of the RFID tag module.

The RFID tag module 20 is installed in the box 30. That is, the RFID tag module 20 may be installed so that the display device 29a (especially, only the screen thereof) is exposed to the outside of the box 30. For example, the RFID tag module 20 may be attached to the outside of the box 30. In this case, the temperature/humidity sensing terminal (24a in FIG. 3) of the temperature/humidity sensor (24 in FIG. 2) is exposed into the box 30 so that the temperature/humidity sensor can detect the temperature/humidity inside the box 30.

The RFID tag module 20 displays the current temperature/humidity among the logged temperature/humidity information on the display device 29a. In addition, various kinds of information about the product contained in the box 30, such as a name, production date, stocking date, and expiration date, may be displayed on the display device 29a. In an example shown in FIG. 5, a product name is displayed as information about the product.

According to the present disclosure, the recipient of the box 30 in which the product is packed can identify the logged temperature/humidity from the RFID tag module 20 and thereby check whether the box 30 is delivered while maintaining the predetermined temperature/humidity.

In addition, the recipient can check the number and time points of alert outputs from the RFID tag module 20 and thereby determine whether to receive or return the product.

While the present disclosure has been particularly shown and described with reference to an exemplary embodiment thereof, it will be understood by those skilled in the art that various changes in form and details may be made therein without departing from the scope of the present disclosure as defined by the appended claims.

## Claims

1. A radio frequency identification (RFID) tag module installed in a box in which a product is packed, and having a temperature and humidity logging function, the RFID tag module comprising:
a temperature/humidity sensor detecting a temperature/humidity inside the box in which the product is packed; and
an RFID tag logging the temperature/humidity detected by the temperature/humidity sensor.

2. The RFID tag module of claim 1, further comprising:
an output device receiving the logged temperature/humidity from the RFID tag and outputting the received temperature/humidity.

3. The RFID tag module of claim 2, wherein the RFID tag outputs an alert through the output device when the logged temperature/humidity is out of a predetermined temperature/humidity range.

4. The RFID tag module of claim 3, wherein the output device includes at least one of a display device and an audio output device.

5. The RFID tag module of claim 4, further comprising:
an energy harvester performing energy harvesting by receiving a radio wave from surroundings and converting the received radio wave into electric energy; and
an electric energy storage receiving the electric energy from the energy harvester and storing the received energy,
wherein the electric energy storage provides the electric energy to at least one of the temperature/humidity sensor and the output device in response to a control signal of the RFID tag.

6. The RFID tag module of claim 5, wherein the RFID tag wakes up and transmits the logged temperature/humidity information to an RFID reader upon receiving a reading signal from the RFID reader, the RFID tag supplies the electric energy from the electric energy storage to the display device and outputs current temperature/humidity information to the display device.

7. The RFID tag module of claim 6, further comprising:
a main substrate on which the RFID tag, the temperature/humidity sensor, the audio output device, the energy harvester, and the electric energy storage are mounted, and the display device is stacked;
a flexible substrate electrically connecting the main substrate and the display device; and
a case protecting the main substrate, the flexible substrate, and the display device, excluding a screen of the display device, from an external environment.

8. The RFID tag module of claim 7, wherein the temperature/humidity sensor includes a temperature/humidity sensing terminal capable of detecting temperature/humidity inside the box, and the temperature/humidity sensing terminal protrudes from the main substrate and further protrudes out of the case.

9. The RFID tag module of claim 1, wherein the RFID tag is a passive tag.
